(19) Europäisches Patentamt
European Patent Office
Office européen des brevets

(11) **EP 3 522 115 A1**

(12) **EUROPEAN PATENT APPLICATION**
published in accordance with Art. 153(4) EPC

(43) Date of publication:
**07.08.2019 Bulletin 2019/32**

(51) Int Cl.:
*G06T 7/70* (2017.01)   *G06K 9/20* (2006.01)
*G06K 9/32* (2006.01)

(21) Application number: **17855951.4**

(22) Date of filing: **22.09.2017**

(86) International application number:
**PCT/JP2017/034184**

(87) International publication number:
**WO 2018/061997 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.09.2016 JP 2016192187**

(71) Applicant: **Nidec Sankyo Corporation Suwa-gun, Nagano 393-8511 (JP)**

(72) Inventor: **NAKAMURA, Hiroshi Suwa-gun Nagano 393-8511 (JP)**

(74) Representative: **Becker Kurig Straus Patentanwälte Bavariastrasse 7 80336 München (DE)**

(54) **MEDIUM RECOGNITION DEVICE AND MEDIUM RECOGNITION METHOD**

(57) A data processor 60 of a medium recognition device 10 includes a projection generator 630 generating projections of a pixel value by luminance projection to the horizontal axis and the vertical axis of a target image; an end-point detector 640 determining two end points of a trapezoidal pattern of a projection waveform for each of the projection to the horizontal axis and the projection to the vertical axis; an evaluated-value acquirer 650 determining the distance W between the two end points of the trapezoidal pattern of the projection waveform associated with the horizontal axis and the distance H between the two end points of the trapezoidal pattern associated with the vertical axis and acquires a predetermined evaluated value using the data on the distances and the width and height of a card 100; and a rotation-angle determiner 660 determining the rotation angle of the card 100 based on the evaluated value from the evaluated-value acquirer 650.

FIG. 3

**Description**

TECHNICAL FIELD

The present invention relates to a medium recognition device that recognizes information on a rectangular medium and a method of recognizing a medium.

BACKGROUND ART

A well-known technique using a digital image for detecting and recognizing a straight line or a predetermined geometric shape defined by straight lines on a rectangular medium that serves as a processing target is the Hough transform, which is widely used in various industrial fields.

This method typically includes the steps of performing pre-processing, such as denoising and edge enhancement, on an image including a recognition target graphic, performing Hough transform on the extracted image pattern to obtain cumulative points, and then performing inverse Hough transform on the cumulative point having the maximum cumulative frequency, to determine a straight line in the image space (for example, refer to PTLs 1 and 2).

In the technique described in PTL 1, which detects the positional coordinates of a work positioned during a production process of a semiconductor device using Hough transform to correct the position, the maximum cumulative point is determined, unwanted patterns are eliminated, and then the straight line that serves as a reference is determined by inverse Hough transform, to achieve angle correction of the work.

In the technique described in PTL 2, Hough transform is used for calculating the shape feature of a polygonal shape to estimate a line segment constituting a portion of the periphery of an object. The number of points transformed to polar coordinates is counted, and the polar coordinates having high frequency are selected. The equation of a straight line is calculated by inverse Hough transform for each of the selected polar coordinates, and the rotation angle is detected.

CITATION LIST

PATENT LITERATURE

[Patent Literature 1] Japanese Unexamined Patent Application Publication No. H11-97512
[Patent Literature 2] Japanese Unexamined Patent Application Publication No. 2010-79643

SUMMARY OF THE INVENTION

PROBLEMS TO BE SOLVED BY THE INVENTION

However, the techniques described in PTLs 1 and 2 determine the maximum cumulative point in the Hough space. Determining the maximum cumulative point in the Hough space in this way is determining the local maximum point in a two-dimensional space. This is usually difficult and the computational load is great because noise caused by unwanted patterns must be eliminated. Thus, high-speed processing requires the use of a high-performance processor. This causes the problem of increased cost.

Thus, in light to the problem described above, the present invention provides a medium recognition device and a method of recognizing a medium that can reduce the computational load.

MEANS FOR SOLVING THE PROBLEM

To solve the above-described issues, a medium recognition device according to the present invention detects, in a digital image, a rotation angle on an image of a rectangular medium, refers to the detected rotation angle, and recognizes information on the rectangular medium, and the medium recognition device is characterized to include a projection generator generating a projection of a pixel value by luminance projection to each of a horizontal axis and a vertical axis of a target image; an end-point detector determining two end points of a projection pattern of a projection waveform for each of the projections to the horizontal axis and the vertical axis; an evaluated-value acquirer determining the distance between the two end points of the projection pattern of the projection waveform associated with the horizontal axis and the distance between the two end points of the projection pattern of the projection waveform associated with the vertical axis, and acquiring a predetermined evaluated value in association with data on the distances and a width and a height of the rectangular medium; and a rotation-angle determiner determining a rotation angle of the rectangular medium based on the evaluated value from the evaluated-value acquirer.

The present invention includes an end-point detector determining two end points of a projection pattern of a projection waveform for each of the projections to the horizontal axis and the vertical axis; an evaluated-value acquirer determining the distance between the two end points of the projection pattern of the projection waveform associated with the horizontal axis and the distance between the two end points of the projection pattern of the projection waveform associated with the vertical axis, and acquiring a predetermined evaluated value in association with data on the distances and a width and a height of the rectangular medium; and a rotation-angle determiner determining a rotation angle of the rectangular medium based on the evaluated value from the evaluated-value acquirer; and determines the rotation angle of the rectangular medium based on the evaluated value associated with the data on the distances of the projection waveform patterns and the width and height of the rectangular medium. Thus, unlike the past, the Hough transform is not used, and the computational load can be reduced. In other words, unlike the past, the local maximum does not have to be analytically extracted from a Hough transform matrix.

According to the present invention, it is preferred that the rotation-angle determiner retrieves an angle corresponding to an evaluated value from a preset reference table based on the evaluated value from the evaluated-value acquirer and determines the result to be the rotation angle of the rectangular medium.

With such a configuration, since the angle corresponding to the evaluated value is retrieved from the preset reference table, and the rotation angle of the rectangular medium is determined, the computational load can be reduced even more.

According to the present invention, it is preferred that the evaluated-value acquirer determines an evaluated value corresponding to the difference between a first value based on the width of the rectangular medium and the distance between the two end points of the projection pattern of the projection waveform associated with the horizontal axis and a second value based on the height of the rectangular medium and the distance between the two end points between the projection pattern of the projection waveform associated with the vertical axis.

With such a configuration, the evaluated value can be acquired with high precision.

According to the present invention, it is preferred that the evaluated-value acquirer determines a rotation angle in accordance with a ratio of a first evaluated value corresponding to the difference between a first value based on the width the rectangular medium and the distance between the two end points of the projection pattern of the projection waveform associated with the horizontal axis and a second value based on the height of the rectangular medium and the distance between the two end points of the projection pattern of the projection waveform associated with the vertical axis to a second evaluated value corresponding to the difference between a third value based on the height of the recognition target medium and the distance between the two end points of the projection pattern of the projection waveform associated with the horizontal axis and a fourth value based on the width of the recognition target medium and the distance between the two end points of the projection pattern of the projection waveform associated with the vertical axis, and the rotation-angle determiner determines a rotation angle of the medium to be the rotation angle determined based on the evaluated value by the evaluated-value acquirer.

With such a configuration, although the computational load is slightly high, the actual rotation angle can be acquired at high precision.

A method of processing an image according to the present invention, detects, in a digital image, a rotation angle on an image of a rectangular medium, and the method of processing an image is characterized to include a projection generating step comprising generating a projection of a pixel value by luminance projection to each of a horizontal axis and a vertical axis of a target image; an end-point detecting step determining two end points of a projection pattern of a projection waveform for each of the projections to the horizontal axis and the vertical axis; an evaluated value acquiring step determining the distance between the two end points of the projection pattern of the projection waveform associated with the horizontal axis and the distance between the two end points of the projection pattern of the projection waveform associated with the vertical axis, and acquiring a predetermined evaluated value in association with data on the distances and a width and a height of a recognition target medium; and a rotation angle determining step determining a rotation angle of the rectangular medium based on the evaluated value determined in the evaluated value acquiring step.

The present invention includes an end point detecting step determining two end points of a projection pattern of a projection waveform for each of the projections to the horizontal axis and the vertical axis; an evaluated value acquiring step determining the distance between the two end points of the projection pattern of the projection waveform associated with the horizontal axis and the distance between the two end points of the projection pattern of the projection waveform associated with the vertical axis, and acquiring a predetermined evaluated value in association with data on the distances and a width and a height of the rectangular medium; and a rotation angle determining step determining a rotation angle of the rectangular medium based on the evaluated value determined in the evaluated value acquiring step; and determines the rotation angle of the rectangular medium based on the evaluated value associated with the data on the distances of the projection waveform patterns and the width and height of the rectangular medium. Thus, unlike the past, the Hough transform is not used, and the computational load can be reduced. In other words, unlike the past, the local maximum does not have to be analytically extracted from a Hough transform matrix.

According to the present invention, it is preferred that the rotation angle determining step retrieves an angle corresponding to the evaluated value from a preset reference table based on the evaluated value in the evaluated value acquiring step and determines the result as the rotation angle of the rectangular medium.

With such a configuration, since the angle corresponding to the evaluated value is retrieved from the preset reference table, and the rotation angle of the rectangular medium is determined, the computational load can be reduced even more.

According to the present invention, it is preferred that the evaluated value acquiring step determines an evaluated value corresponding to the difference between a first value based on the width of the rectangular medium and the distance between the two end points of the projection pattern of the projection waveform associated with the horizontal axis and a second value based on the height of the rectangular medium and the distance between the two end points between the projection pattern of the projection waveform associated with the vertical axis.

With such a configuration, the evaluated value can be acquired with high precision.

According to the present invention, it is preferred that the evaluated value acquiring step determines a rotation angle in accordance with a ratio of a first evaluated value corresponding to the difference between a first value based on the width the rectangular medium and the distance between the two end points of the projection pattern of the projection waveform associated with the horizontal axis and a second value based on the height of the rectangular medium and the distance between the two end points of the projection pattern of the projection waveform associated with the vertical axis to a second evaluated value corresponding to the difference between a third value based on the height of the rectangular medium and the distance between the two end points of the projection waveform associated with the horizontal axis and a fourth value based on the width of the rectangular medium and the distance between the two end points of the projection pattern of the projection waveform associated with the vertical axis, and the rotation angle determining step determines a rotation angle of the rectangular medium to be the rotation angle determined based on the evaluated value determined in the evaluated value acquiring step.

With such a configuration, although the computational load is slightly high, the actual rotation angle can be acquired at high precision.

EFFECT OF THE INVENTION

According to the present invention, the medium recognition device and the method of recognizing a medium determine the rotation angle of a rectangular medium on the basis of an evaluated value associated with distance data of projection waveform patterns and the width and height of the rectangular medium. Thus, unlike the past, the Hough transform is not used, and the computational load can be reduced.

BRIEF DESCRIPTION OF THE DRAWINGS

FIG. 1 illustrates an example configuration of main components of a medium recognition device according to a first embodiment of the present invention.
FIG. 2 is a schematic external view of a card medium exemplifying a rectangular medium.
FIG. 3 is a block diagram illustrating an example configuration of a data processor of the medium recognition device according to the first embodiment.
FIG. 4 illustrates an example image capturing a card.
FIG. 5 illustrates an example image acquired after performing edge enhancement and digitization on the image in FIG. 4.
FIG. 6 illustrates a projection profile by a projection generator according to the first embodiment.
FIG. 7 illustrates a geometric relation of the distances between projection patterns used for acquiring an evaluated value for the image acquired after performing edge enhancement and digitization to the image in FIG. 4 and the width and height of the card.
FIG. 8 is a flow chart illustrating the process carried out by the data processor according to the first embodiment, mainly through a specific example of rotation angle detection process.
FIG. 9 is a flow chart illustrating the comprehensive operation of the medium recognition device according to the first embodiment.
FIG. 10 is a block diagram illustrating an example configuration of a data processor of the medium recognition device according to a second embodiment.
FIG. 11 illustrates a projection profile by a projection generator according to a third embodiment.

MODE FOR CARRYING OUT THE INVENTION

Embodiments of the present invention will now be described with reference to the drawings.

(First Embodiment)

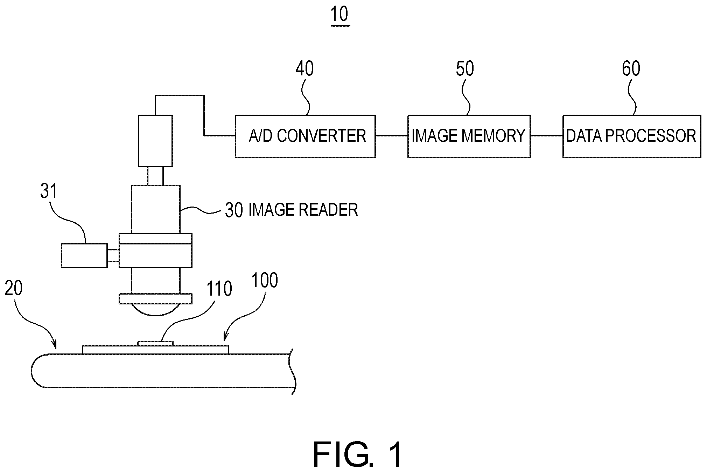

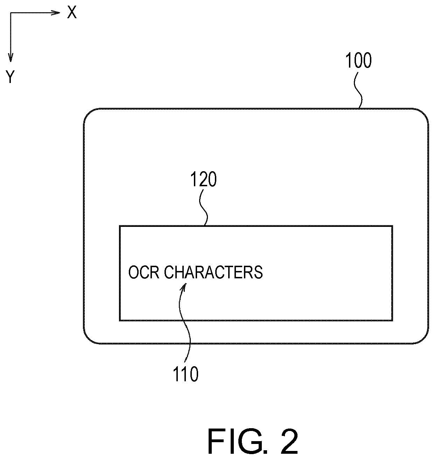

FIG. 1 illustrates an example configuration of main components of a medium recognition device according to a first embodiment of the present invention. FIG. 2 is a schematic external view of a card exemplifying a rectangular medium.

A medium recognition device 10 according to this embodiment detects, in a digital image, the rotation angle on an image of a rectangular medium 100, refers to the detected rotation angle, and recognizes information 110, such as characters or a barcode recorded on the rectangular medium 100.

The rectangular medium 100 is a typical card in accordance with JIS (hereinafter, referred to as "card"). The card 100 has a rectangular shape (a rectangle having a long side and a short side) and is, for example, a plastic card having a width (a) of 126 mm, a height (b) of 80 mm, and a thickness of 0.76 mm. Note that the rectangular medium is not limited to the card described above, and alternatively, may be a plastic card having, for example, a width of 86 mm, a height of 54 mm, and a thickness of 0.76 mm. Additionally, the medium is not limited to a card and alternatively may be an ID card, a passport book, or a driver's license. Note that in this embodiment, the width direction of the card 100 is X axis direction in FIG. 2. The direction orthogonal to the X axis direction is the Y axis direction. For simplification in this embodiment, the direction of the information 110, such as character string, formed in the information (for example, OCR characters) recording region 120, i.e., the arrayed direction of the characters, is defined as the X axis direction, as illustrated in FIG. 2. And, the direction orthogonal to the X axis direction is the Y axis direction. Specifically, the direction orthogonal to the arrayed direction of the characters is the Y axis direction.

As illustrated in FIG. 1, the medium recognition device 10 includes a table 20 on which the card 100 is placed, an image reader 30 that serves as an image data inputting unit, an analog-to-digital converter (A/D converter) 40, an image memory 50, and a data processor 60.

The image reader 30 includes a solid-state image device (image sensor) using a photoelectric transducer that detects light and generates electric charges or a charge coupled device (CCD) image sensor, and an optical system (such as lenses) that guides incident light onto pixels regions of the image sensor (forms an image of an object). The image reader 30 is placed over the table 20 and captures a predetermined region including the entire card 100 irradiated with an illuminating light source 31. Note that the solid-state image device (image sensor) may be a complementary metal oxide semiconductor (CMOS) image sensor.

The A/D converter 40 converts the image including the card 100 captured by the image reader 30 to digital image data and stores the converted data to the image memory 50. Note that the function of the A/D converter 40 can be included in the image reader 30.

The image memory 50 records (stores) the image data of the digitized card 100 including the information 110, such as the OCR character string, captured by the image reader 30. The original image stored in the image memory 50 includes multiple pixels in the form of a matrix, more specifically, includes M rows of pixels in the X axis direction and N columns in the Y axis direction, although not illustrated. Each pixel has a pixel value (luminance value). In this embodiment, each pixel value is, for example, a value within the range of 0 to 255 in 8 bits. The closer to the black the pixel value gets, the smaller value it has. The closer to the white the pixel value gets, the larger value it has. Note that the image memory 50 may be any memory that can store image data, such as a RAM, an SDRAM, a DDRSDRAM, or a RDRAM.

The data processor 60 has a function of detecting, in a digital image, the rotation angle on an image of the card 100, referring to the detected rotation angle, and recognizing the information 110, such as characters or a barcode, recorded on the card 100. The data processor 60 constitutes a portion of a CPU and other components that comprehensively control the image processor 10.

[Configuration and Function of Each component of Data Processor 60]

The basic configuration and function of each Component of the data processor 60 will now be described.

The data processor 60 retrieves a multi-level image data (a gray-scaled image of multiple tones, e.g., 256 tones) from the image memory 50.

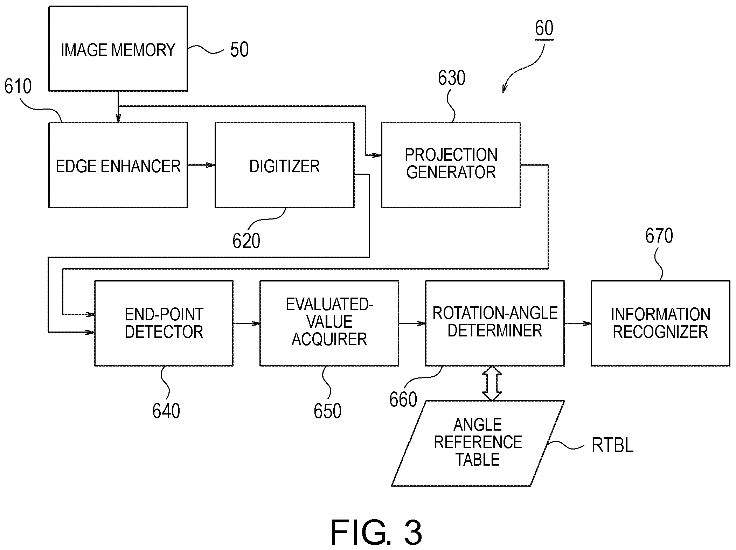

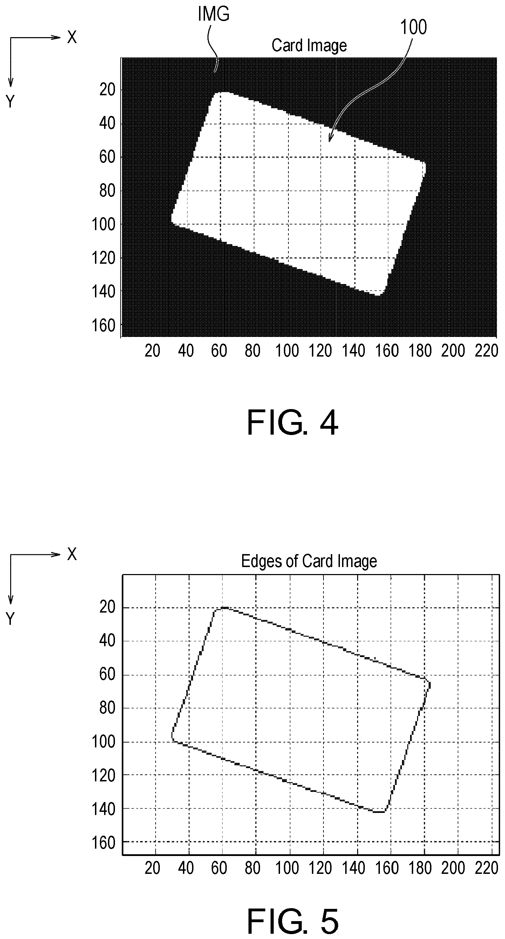

FIG. 3 is a block diagram illustrating an example configuration of the data processor 60 of the medium recognition device 10 according to the first embodiment. FIG. 4 illustrates an example image capturing a card. FIG. 5 illustrates an example image acquired after performing edge enhancement and digitization on the image in FIG. 4.

The data processor 60 includes an edge enhancer 610, a digitizer 620, a projection generator 630, an end-point detector 640, an evaluated-value acquirer 650, a rotation-angle determiner 660, an information recognizer 670, and an angle reference table RTBL.

Here, the process of detecting the rotation angle and the process of recognizing the information on the card 100 will be described as an example while taking the rectangle drawn on an image space, as illustrated in FIG. 4. The rectangle in FIG. 4 exemplifies an image IMG capturing the card 100. The image IMG may include noise and distortion depending on the condition of image capturing. Thus, denoising is often performed during the pre-processing stage. Then, edge enhancement and digitization are performed to acquire the image IMG in FIG. 5. In this example, digitization is performed such that straight lines are black, and the background is white. Alternatively, the straight lines may be white, and the background may be black.

Based on the above, the edge enhancer 610 performs edge enhancement to the 256-tone gray-scaled image data retrieved from the image memory 50, and the corresponding image is output to the digitizer 620.

The digitizer 620 performs digitization to the 256-tone gray-scaled image data retrieved from the image memory 50 and edge enhanced, and the corresponding image information is sent to, for example, the end-point detector 640. The digitizer 620 determines a threshold value through an appropriate method and converts the original multi-level gray-scaled image to a monochrome digital image.

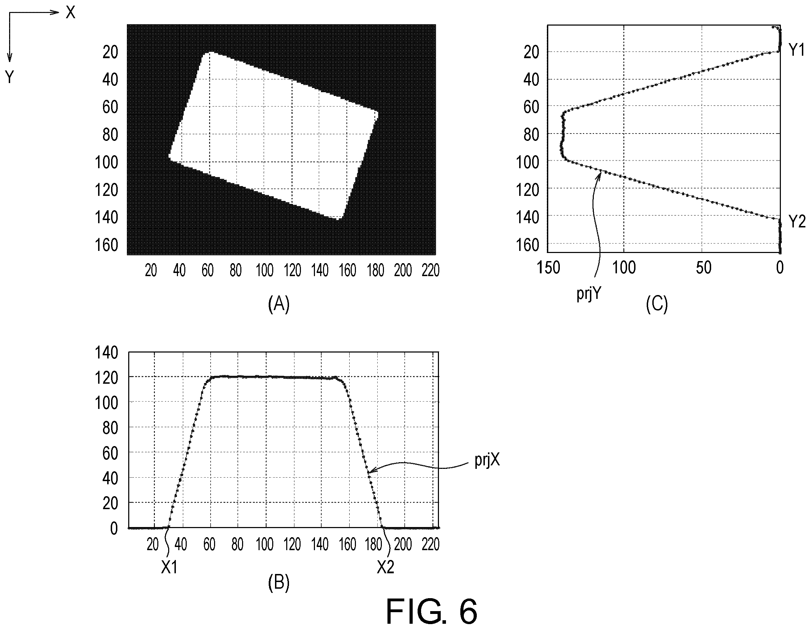

The projection generator 630 generates a first projection prjX and a second projection prjY of a pixel value by luminance projection to the horizontal axis (X axis) and the vertical axis (Y axis) of the image IMG, as illustrated in FIG. 6.

Here, the first projection prjX is derived by determining the average of the luminance value of each line in the direction orthogonal to the X axis. The second projection prjY is derived by determining the average of the luminance value of each line in the direction orthogonal to the Y axis.

FIG. 6 illustrates projection profiles acquired by the projection generator according to the first embodiment. FIG. 6(A) illustrates the target image; FIG. 6(B) illustrates the profile of the first projection prjX to the X axis; and FIG. 6(C) illustrates the profile of the second projection prjY to the Y axis. Note that a projection profile is equivalent to a projection pattern of a projection waveform.

In this embodiment, the first projection prjX has two points Xi on the left and right at which the output starts to increase: end points X1 (=30) and X2 (=184). The first projection prjX has a trapezoidal shape (trapezoidal pattern). The second projection prjY has two points Yi on the top and bottom at which the output starts to increase: end points Y1 (=20) and Y2 (=143). The second projection prjY has a trapezoidal shape (trapezoidal pattern).

The end-point detector 640 determines the two end points of the projection pattern of the projection waveform (projection profile) for each of the first projection prjX to the X axis (horizontal axis) and the second projection prjY to the Y axis (vertical axis). In this embodiment, the end-point detector 640 determines the two end points X1 (=30) and X2 (=184) for the first projection prjX, and the two end points Y1 (=20) and Y2 (=143) for the second projection prjY.

The evaluated-value acquirer 650 determines the distance W (=X2-X1) between the two end points X1 and X2 of the projection pattern of the projection waveform of the first projection prjX associated with the X axis (horizontal axis), and the distance H (Y2-Y1) between the two end points Y1 and Y2 of the projection pattern of the projection waveform of the second projection prjY associated with the Y axis (vertical axis), and acquires a predetermined evaluated value in association with the distance data W and H and the width a and height b of the recognition target medium 100.

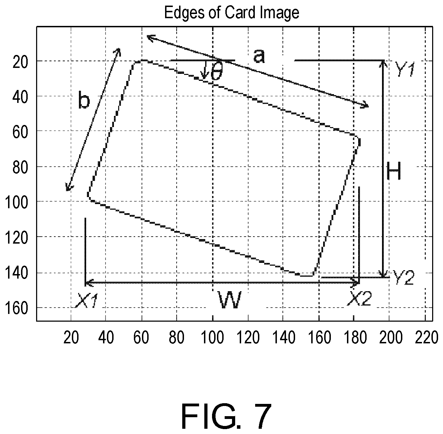

FIG. 7 illustrates a geometric relation of the distances W and H between projection patterns used for acquiring the evaluated value for the image acquired after performing edge enhancement and digitization to the image in FIG. 4 and the width a and height b of the card 100. The geometric relation of the distances W and H of the projection patterns W and H and the width a and height b of the card 100 in FIG. 7 are referred to by, for example, the end-point detector 640 and the evaluated-value acquirer 650.

The evaluated-value acquirer 650 determines an evaluated value corresponding to the difference (a·W-b·H) between a first value (a·W) based on the width a of the card 100 and the distance W between the two end points X1 and X2 of the projection pattern of the projection waveform of the first projection prjX associated with the X axis (horizontal axis) and a second value (b·H) based on the height b of the card 100 and the distance H between the two end points Y1 and Y2 of the projection pattern of the projection waveform of the second projection prjY associated with the Y axis (vertical axis). The evaluated-value acquirer 650 supplies the acquired evaluated value to the rotation-angle determiner 660.

The rotation-angle determiner 660 determines the rotation angle v(θ) of the card 100 on the basis of the evaluated value from the evaluated-value acquirer 650. The rotation-angle determiner 660 retrieves an angle corresponding to the evaluated value from the preset angle reference table RTBL on the basis of the evaluated value from the evaluated-value acquirer 650 and determines the result as the rotation angle of the card 100.

The information recognizer 670 refers to the rotation angle v(θ) determined by the rotation-angle determiner 660 and performs a recognition process of the information 110 on the card 100. For example, the information recognizer 670 corrects (adjusts) the tilt on an image of the information recording region 120 of the card 100 of the image data of FIG. 4 or 5 depending on the detected rotation angle v(θ), and performs recognition of the information in the information recording region 120 in the corrected image, for example character recognition.

In such character recognition, separation positions between characters in a character string in the captured image are searched, and the characters are recognized.

The information recognizer 670 determines the character separation positions, for example, on the basis of a digital threshold value. After the character clipping ends, the circumscribed rectangular region (the coordinates of the top, bottom, left, and right) of characters that are the target of recognition are determined. Then, through characteristic extraction, the above-described circumscribed rectangular region is divided into a predetermined number of sub-regions, for example, one circumscribed rectangular region is divided into 5×5 regions, each of which is a sub-region. For each sub-region, the percentage of the number of black pixels to total number of pixels in the sub-region is determined, and a character vector having the percentage as a vector element is generated. Next, the determined character vector and the reference character vectors preliminarily determined for all characters used in the recording medium are compared, and the character corresponding to the vector having the highest similarity (for example, a normalized correlation coefficient) is set as a candidate character. Note that the reference character vectors are preliminarily stored, and when characteristics are compared, data on a character having high similarity is retrieved from the storage unit for characteristic comparison. Then, basically, the candidate character set through the characteristic comparison is recognized as the character used on the recording medium.

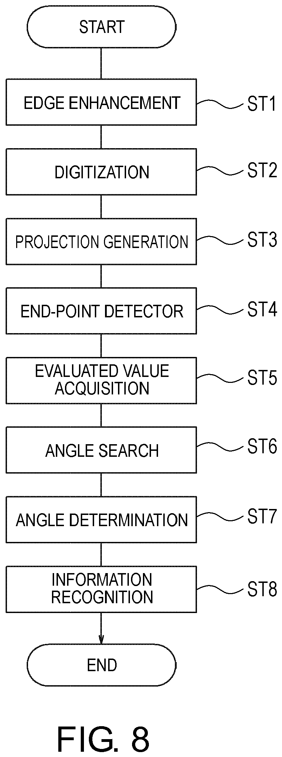

Here, the process carried out by the data processor 60 according to the first embodiment will be described with reference to FIGs. 4 to 8, mainly through specific examples of rotation angle detection. FIG. 8 is a flow chart illustrating the process carried out by the data processor 60 according to the first embodiment, mainly through a specific example of rotation angle detection.

In the data processor 60, the 256-tone gray-scaled image data retrieved from the image memory 50 is subjected to edge enhancement at the end-point detector 640 (step ST1); the 256-tone gray-scaled image data retrieved from the image memory 50 and edge enhanced is digitized at the digitizer 620 (step ST2); and then the image information is sent to the end-point detector 640.

Next, the projection generator 630 generates the first projection prjX and the second projection prjY of a pixel value by luminance projection to the X axis (horizontal axis) and the Y axis (vertical axis) of the target image IMG, as illustrated in FIG. 6 (step ST3). As described above, the first projection prjX is derived by determining the average of the luminance value of each line in the direction orthogonal to the X axis. The second projection prjY is derived by determining the average of the luminance value of each line in the direction orthogonal to the Y axis.

The end-point detector 640 detects the two end points of the projection pattern of the projection waveform (projection profile) for each of the first projection prjX to the X axis (horizontal axis) and the second projection prjY to the Y axis (vertical axis) (step ST4). Points Xi at which the output value starts to increase are determined in the first projection prjX. As illustrated in FIG. 6(B), two points Xi residing on the left and right, which are denoted by X1 and X2 from the left, are defined as X1=30 and X2=184 in the example. Similarly, points Yj at which the output value starts to increase are determined in the second prjY. Two points Yi residing on the top and bottom, which are denoted by Y1 and Y2 from the top, are defined as Y1=20 and Y2=143 in the example. In this embodiment, the end-point detector 640 determines the two end points X1 (=30) and X2 (=184) for the first projection prjX, and the two end points Y1 (=20) and Y2 (=143) for the second projection prjY.

The evaluated-value acquirer 650 determines the distance W (=X2-X1) between the two end points X1 and X2 of the projection pattern of the projection waveform of the first projection prjX associated with the X axis (horizontal axis), and the distance H (Y2-Y1) between the two end points Y1 and Y2 of the projection pattern of the projection waveform of the second projection prjY associated with the Y axis (vertical axis), and acquires a predetermined evaluated value in association with the distance data W and H and the width a and height b of the card 100 (step ST5).

The evaluated-value acquirer 650 determines an evaluated value corresponding to the difference (a·W-b·H) between a first value (a·W) based on the width a of the card 100 and the distance W between the two end points X1 and X2 of the projection pattern of the projection waveform of the first projection prjX associated with the X axis (horizontal axis) and a second value (b·H) based on the height b of the recognition target medium 100 and the distance H between the two end points Y1 and Y2 of the projection pattern of the projection waveform of the second projection prjY associated with the Y axis (vertical axis).

The rotation-angle determiner 660 determines the rotation angle ν(θ) of the card 100 on the basis of the evaluated value from the evaluated-value acquirer 650. The rotation-angle determiner 660 retrieves the angle corresponding to the evaluated value from the pre-set reference table RTBL on the basis of the evaluated value from the evaluated-value acquirer 650 (step ST6) and determines the result as the rotation angle of the medium (step ST7).

The evaluated-value acquirer 650 defines the length of the long side of the rectangle in the image as a and the length of the short side as b, as in FIG. 7, and derives

[Equations I]

$$W = X2 - X1 \qquad\qquad (1)$$

$$H = Y2 - Y1 \qquad (2)$$

from which the following equations are derived from a geometric view.
[Equations II]

$$W = a \cos \theta + b \sin \theta \qquad (3)$$

$$H = b \cos \theta + a \sin \theta \qquad (4)$$

Equations (3) and (4) are modified to obtain the following equation.
[Equation III]

$$(a^2 - b^2) \cos \theta = aW - bH \qquad (5)$$

Thus, angle θ is determined from the following equation.
[Equation IV]

$$\theta = \cos^{-1} \frac{aW - bH}{a^2 - b^2} \qquad where \ a \neq b \qquad (6)$$

The following equation is derived from equations (3) and (4).

$$[\mathrm{Equation \ V}]$$

$$(a^2 - b^2) \sin \theta = aH - bW$$

Thus, the angle θ can also be determined from the following equation.
[Equation VI]

$$\theta = \tan^{-1} \frac{aH - bW}{aW - bH} \qquad where \ aW \neq bH \qquad (7)$$

Here, a=126, b=80, W=184-30=154, and H=143-20=123 are substituted into equation (7) to obtain θ=18.4.
The angle can be determined arithmetically by equation (7) or (6). However, in the first embodiment, the following angle determination process is carried out in consideration of installment to equipment because the calculation for tan-1 is high cost.
By substituting v(θ) into the left side of the equation (5), and calculating v(θ), which is a function of θ, at 10-degree increments, a numerical list, such as that below, is prepared and stored in the memory as the angle reference table RTBL.

[Table 1]
$v(0°) = (a^2 - b^2) \cos 0° = (126^2 - 80^2) \times 1 = 9476$
$v(20°) = (a^2 - b^2) \cos 20° = (126^2 - 80^2) \times 0.94 = 8907$
$v(30°) = (a^2 - b^2) \cos 30° = (126^2 - 80^2) \times 0.87 = 8207$

...

$v(60°) = (a^2 - b^2) \cos 60° = (126^2 - 80^2) \times 0.5 = 4738$

...

(continued)

$$v(80°) = (a^2 - b^2) \cos 80° = (126^2 - 80^2) \times 0.17 = 1645$$
$$v(90°) = (a^2 - b^2) \cos 90° = (126^2 - 80^2) \times 0 = 0$$
...
$$v(120°) = (a^2 - b^2) \cos 120° = (126^2 - 80^2) \times (-0.5) = -4738$$
...
$$v(180°) = (a^2 - b^2) \cos 0° = (126^2 - 80^2) \times (-1) = -9476$$

Substituting the actual values of W and H into the right side of equation (5) derives:

$$aW \cdot bH = 8956$$

This value approximates v(20). Thus, the rotation angle is θ=20°. In other words, $v(10)=(a^2-b^2)\cos10°=(126^2-80^2)*0.98=9332$. Thus, the determined value 8956 is closer to v(20)=8907 than v(10)=9332.

Since the performance of CPUs has dramatically improved, the rotation angle may be directly determined from $\cos-1$. However, the method described above is an effective alternative when there are restrictions on the implementation condition.

Then, the information recognizer 670 refers to the rotation angle v(θ) determined by the rotation-angle determiner 660 and performs recognition of the information 110 on the card 100 (step ST8). For example, the information recognizer 670 corrects the tilt on an image of the information recording region 120 of the card 100 of the image data of FIG. 4 or 5 depending on the detected rotation angle v(θ), and performs recognition of the information in the information recording region 120 in the corrected image, for example character recognition.

In this way, the data processor 60 includes a projection generator 630 that generates projections of a pixel value by luminance projection to the X axis (horizontal axis) and the vertical axis of a target image when detecting, in a digital image, the rotation angle on an image of a card 100; an end-point detector 640 that determines two end points of a trapezoidal pattern of a projection waveform of each of the projection to the X axis (horizontal axis) and the projection to the Y axis (vertical axis); an evaluated-value acquirer 650 that determines the distance W between the two end points of the trapezoidal pattern of the projection waveform associated with the X axis (horizontal axis) and the distance H of the two end points of the trapezoidal pattern associated with the Y axis (vertical axis) and acquires a predetermined evaluated value using the data on the distances and the width and height of the target medium; and a rotation-angle determiner 660 that retrieves an angle corresponding to the evaluated value from a preset reference table RTBL using the evaluated value as a key and determines the result as the rotation angle of the card 100. With such a configuration, the rotation angle of a card can be detected at a low cost with a computational load lower than that in the past, without using Hough transform for analytically extracting local maximums from a Hough transform matrix.

[Comprehensive Operation of Medium Recognition Device 10]

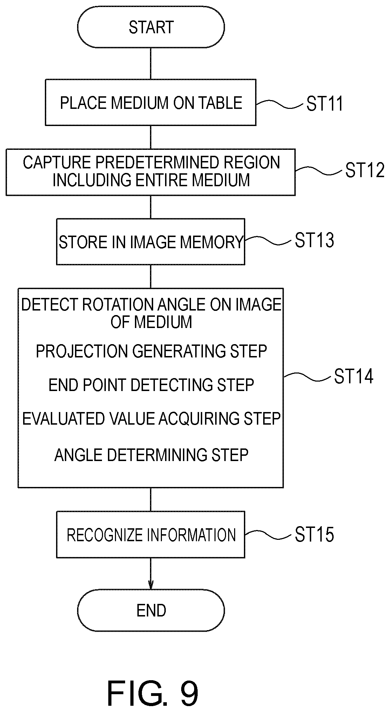

The comprehensive operation of the medium recognition device 10 according to the first embodiment will now be described with reference to FIG. 9. FIG. 9 is a flow chart illustrating the comprehensive operation of the medium recognition device 10 according to the first embodiment.

First, the card 100 is placed on the table 20 (step ST11).

In this state, the image reader 30 captures a predetermined region including the entire card 100 irradiated with the illuminating light source 31 (step ST12). Then, the A/D converter 40 converts the image including the card 100 captured by the image reader 30 to digital image data and stores the converted data to the image memory 50 (step ST13).

Then, the data processor 60 uses the digital image stored in the image memory 50 to detect the rotation angle on an image of the card 100 (step ST14).

The detection of the rotation angle is performed mainly through the following steps.

First, luminance projection is performed on the X axis (horizontal axis) and the Y axis (vertical axis) of the target image to form projections (projection generating step). Next, the two end points of each of the projection to the X axis (horizontal axis) and the projection to the vertical axis is determined (end point detecting step). Further, the distance W between the two end points associated with the X axis (horizontal axis) and the distance H between the two end points associated with the Y axis (vertical axis) are determined, and a predetermined evaluated value is acquired (calculated) using the data on the distances and the width and height of a predetermined target medium (evaluated value acquiring step). Finally, an angle corresponding to the evaluated value is retrieved from a preset reference table RTBL using the evaluated value as a key, and the result is determined to be the rotation angle of the medium (angle determining step).

Then, the data processor 60 refers to the detected rotation angle and recognizes the information 110, such as characters or a barcode, recorded on the card 100 (step ST15).

(Main Advantageous Effects of This Embodiment)

As described above, instead of analytically an extracting local maximum from a Hough transform matrix when detecting in a digital image, the rotation angle on an image of a card 100 that serves as a rectangular medium, the medium recognition device 10 includes a projection generator 630 that generates projections of a pixel value by luminance projection to the X axis (horizontal axis) and the Y axis (vertical axis) of a target image; an end-point detector 640 that determines two end points of a trapezoidal pattern of a projection waveform of each of the projection to the X axis (horizontal axis) and the projection to the Y axis (vertical axis); an evaluated-value acquirer 650 that determines the distance W between the two end points of the trapezoidal pattern of the projection waveform associated with the X axis (horizontal axis) and the distance H between the two end points of the trapezoidal pattern associated with the Y axis (vertical axis) and acquires a predetermined evaluated value using the data on the distances and the width and height of the card 100; and a rotation-angle determiner 660 that retrieves an angle corresponding to the evaluated value from a preset reference table RTBL using the evaluated value as a key and determines the result to be the rotation angle of the card 100.

Thus, the medium recognition device 10 can achieve the following advantageous effects.

The medium recognition device 10 can detect the rotation angle of the card 100 with a computational load lower than that in the past, without performing analytical extraction of a local maximum from a Hough transform matrix through Hough transform. In other words, the image processor 10 can detect the rotation angle of the card 100 in a shorter time with a cost lower than those in the past, without performing analytical extraction of a local maximum from a Hough transform matrix through Hough transform.

The rotation-angle determiner 660 retrieves an angle corresponding to the evaluated value from the preset reference table on the basis of the evaluated value from the evaluated-value acquirer 650 and determines the result to be the rotation angle of the card 100. This can further reduce the computational load. In other words, the computational load can be reduced, and an inexpensive processing system can be provided.

The evaluated-value acquirer 650 determines an evaluated value corresponding to the difference ($a \cdot W - b \cdot H$) between a first value ($a \cdot W$) based on the width a of the card 100 and the distance W between the two end points X1 and X2 of the projection pattern of the projection waveform associated with the X axis (horizontal axis) and a second value ($b \cdot H$) based on the height b of the card 100 and the distance H between the two end points Y1 and Y2 of the projection pattern of the projection waveform associated with the Y axis (vertical axis).

(Second Embodiment)

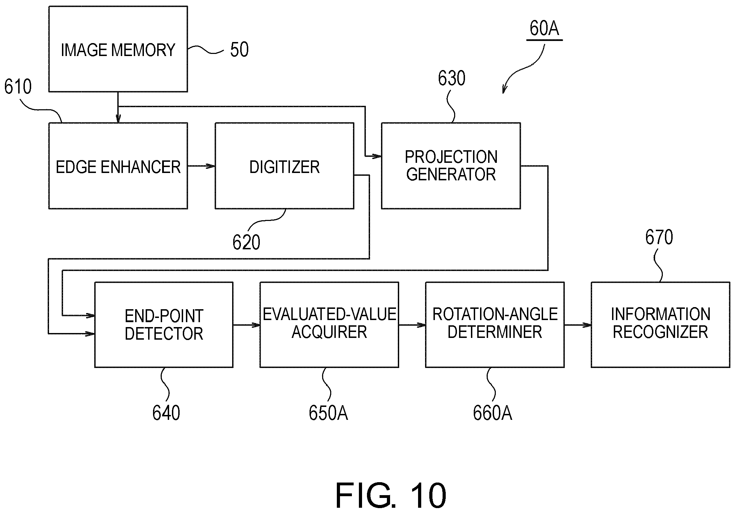

FIG. 10 is a block diagram illustrating an example configuration of a data processor of a medium recognition device according to a second embodiment.

A data processor 60A according to the second embodiment differs from the data processor 60 according to the first embodiment in the following points.

In the data processor 60 according to the first embodiment, the rotation-angle determiner 660 retrieves an angle corresponding to the evaluated value from the preset reference table on the basis of the evaluated value from the evaluated-value acquirer 650 and determines the result to be the rotation angle of the card 100. In contrast, in the data processor 60A according to the second embodiment, an evaluated-value acquirer 650A determines a rotation angle $v(\theta)$ through calculation, and a rotation-angle determiner 660A determines the rotation angle that serves as the evaluated value determined by the evaluated-value acquirer 650A to be the rotation angle of the card 100.

The evaluated-value acquirer 650A determines, from the above-described equation (7) (the equation (7) below), the rotation angle in accordance with the ratio of a first evaluated value corresponding to the difference ($a \cdot W - b \cdot H$) between a first value ($a \cdot W$) based on the width a of the card 100 and the distance W between the two end points X1 and X2 of the projection pattern of the projection waveform associated with the X axis (horizontal axis) and a second value ($b \cdot H$) based on the height b of the card 100 and the distance H between the two end points Y1 and Y2 of the projection pattern of the projection waveform associated with the height b of the card 100 of the Y axis (vertical axis) to a second evaluated value corresponding to the difference between a third value ($b \cdot W$) based on the height b of the recognition target medium 100 and the distance W between the two end points X1 and X2 of the projection pattern of the projection waveform associated with the X axis (horizontal axis) and a fourth value ($a \cdot H$) based on the width a of the card 100 and the distance H between the two end points Y1 and Y2 of the projection pattern of the projection waveform associated with the Y axis (vertical axis).

[Equations VII]

$$\theta = \tan^{-1} \frac{aH - bW}{aW - bH} \qquad where \ aW \neq bH \qquad (7)$$

According to the second embodiment, although the computational load is slightly high, the actual rotation angle can be acquired at high precision, and the speed of the rotation angle determination process can be increased.

(Third Embodiment)

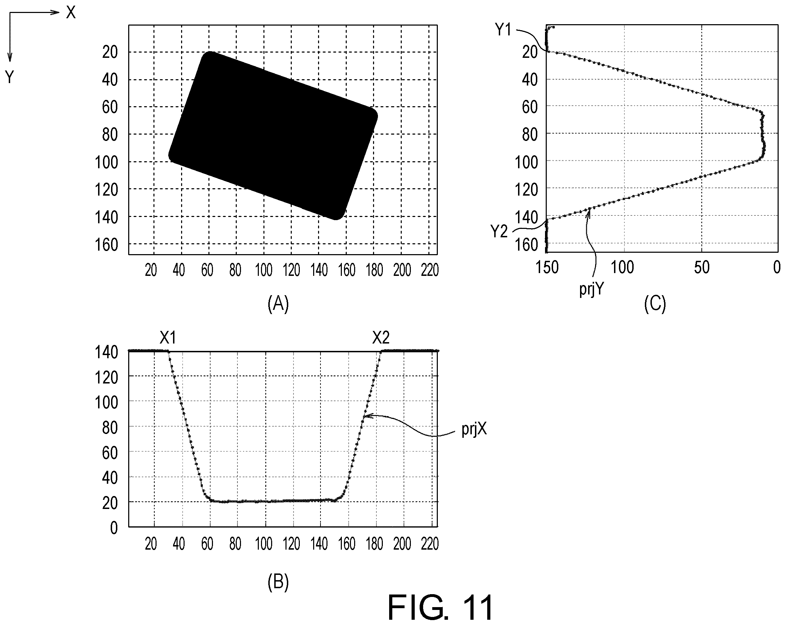

FIG. 11 illustrates projection profiles generated by the projection generator according to a third embodiment. FIG. 11(A) illustrates a target image; FIG. 11(B) illustrates a profile of the first projection prjX to the X axis; and FIG. 11(C) illustrates a profile of the second projection prjY to the Y axis.
The third embodiment differs from the first and second embodiments in the following points.
The target image of projection generation according to the first and second embodiments produces a white card 100 and a black background. In contrast, the target image of projection generation according to the third embodiment produces a black card 100 and a white background.
According to the second embodiment, even with such an image, a projection profile similar to that according to the first embodiment can be acquired, and the same advantageous effects as those according to the first and second embodiments can be achieved.

(Other Applications)

With the medium recognition device 10 according to this embodiment, a method of detecting angles of straight lines or geometric patterns using projections to the horizontal and vertical axes of an image, without the Hough transform, can be used alone or can be used to determine the approximate angle before searching for cumulative points in detecting straight lines and geometric pattern with the Hough transform.
In this way, the precision of detection of the rotation angle can be maintained high.
Note that the method described in detail above may be provided as a program corresponding to the above-described procedure and be executed by a computer such as a CPU. Further, such a program can be stored on a recording medium such as a semiconductor memory, a magnetic disk, an optical disk, etc., and be accessed by a computer in which the recording medium is loaded to execute the program.

DESCRIPTION OF REFERENCE NUMERALS

| | |
|---|---|
| 10 | medium recognition device |
| 20 | table |
| 30 | image reader |
| 40 | analog-to-digital converter (A/D converter) |
| 50 | image memory |
| 60, 60A | data processor |
| 610 | edge enhancer |
| 620 | digitizer |
| 630 | projection generator |
| 640 | end-point detector |
| 650, 650A | evaluated-value acquirer |
| 660, 660A | rotation-angle determiner |
| 670 | information recognizer |
| RTBL | angle reference table |
| 100 | card (rectangular medium) |
| 110 | information |

**Claims**

1. A medium recognition device detecting, in a digital image, a rotation angle on an image of a rectangular medium, referring to the detected rotation angle, and recognizing information on the rectangular medium, the medium recognition device comprising:

a projection generator generating a projection of a pixel value by luminance projection to each of a horizontal axis and a vertical axis of a target image;

an end-point detector determining two end points of a projection pattern of a projection waveform for each of the projections to the horizontal axis and the vertical axis;

an evaluated-value acquirer determining a distance between the two end points of the projection pattern of the projection waveform associated with the horizontal axis and a distance between the two end points of the projection pattern of the projection waveform associated with the vertical axis, and acquiring a predetermined evaluated value in association with data on the distances and a width and a height of the rectangular medium; and

a rotation-angle determiner determining a rotation angle of the rectangular medium based on the evaluated value from the evaluated-value acquirer.

2. The medium recognition device according to claim 1, wherein the rotation-angle determiner retrieves an angle corresponding to an evaluated value from a preset reference table based on the evaluated value from the evaluated-value acquirer and determines a result to be the rotation angle of the rectangular medium.

3. The medium recognition device according to claim 2, wherein the evaluated-value acquirer determines an evaluated value corresponding to a difference between a first value based on the width of the rectangular medium and the distance between the two end points of the projection pattern of the projection waveform associated with the horizontal axis and a second value based on the height of the rectangular medium and the distance between the two end points between the projection pattern of the projection waveform associated with the vertical axis.

4. The medium recognition device according to claim 1, wherein,

the evaluated-value acquirer determines a rotation angle in accordance with a ratio of a first evaluated value corresponding to a difference between a first value based on the width the rectangular medium and the distance between the two end points of the projection pattern of the projection waveform associated with the horizontal axis and a second value based on the height of the rectangular medium and the distance between the two end points of the projection pattern of the projection waveform associated with the vertical axis to a second evaluated value corresponding to a difference between a third value based on the height of the rectangular medium and the distance between the two end points of the projection pattern of the projection waveform associated with the horizontal axis and a fourth value based on the width of the rectangular medium and the distance between the two end points of the projection pattern of the projection waveform associated with the vertical axis, and

the rotation-angle determiner determines a rotation angle of the rectangular medium to be the rotation angle determined based on the evaluated value by the evaluated-value acquirer.

5. A method of recognizing a medium in a digital image by detecting a rotation angle on an image of a rectangular medium, referring to the detected rotation angle, and recognizing information on the rectangular medium, the method comprising:

a projection generating step comprising generating a projection of a pixel value by luminance projection to each of a horizontal axis and a vertical axis of a target image;

an end-point detecting step determining two end points of a projection pattern of a projection waveform for each of the projections to the horizontal axis and the vertical axis;

an evaluated value acquiring step determining a distance between the two end points of the projection pattern of the projection waveform associated with the horizontal axis and a distance between the two end points of the projection pattern of the projection waveform associated with the vertical axis, and acquiring a predetermined evaluated value in association with data on the distances and a width and a height of the rectangular medium; and

a rotation angle determining step determining a rotation angle of the rectangular medium based on the evaluated value determined in the evaluated value acquiring step.

6. The method of recognizing a medium according to claim 5, wherein the rotation angle determining step comprises retrieving an angle corresponding to the evaluated value from a preset reference table based on the evaluated value in the evaluated value acquiring step and determining a result as the rotation angle of the rectangular medium.

7. The method of recognizing a medium according to claim 6, wherein the evaluated value acquiring step comprises determining an evaluated value corresponding to a difference between a first value based on the width of the rectangular medium and the distance between the two end points of the projection pattern of the projection waveform associated with the horizontal axis and a second value based on the height of the rectangular medium and the distance between the two end points between the projection pattern of the projection waveform associated with the vertical axis.

8. The method of recognizing a medium according to claim 5, wherein,
the evaluated value acquiring step comprises determining a rotation angle in accordance with a ratio of a first evaluated value corresponding to a difference between a first value based on the width the rectangular medium and the distance between the two end points of the projection pattern of the projection waveform associated with the horizontal axis and a second value based on the height of the rectangular medium and the distance between the two end points of the projection pattern of the projection waveform associated with the vertical axis to a second evaluated value corresponding to a difference between a third value based on the height of the rectangular medium and the distance between the two end points of the projection pattern of the projection waveform associated with the horizontal axis and a fourth value based on the width of the rectangular medium and the distance between the two end points of the projection pattern of the projection waveform associated with the vertical axis, and
the rotation angle determining step comprises determining a rotation angle of the rectangular medium to be the rotation angle determined based on the evaluated value determined in the evaluated value acquiring step.

FIG. 1

X

Y

100

120

OCR CHARACTERS

110

# FIG. 2

FIG. 3

EP 3 522 115 A1

FIG. 4

FIG. 5

(A)

(B)

(C)

FIG. 6

EP 3 522 115 A1

FIG. 7

```
        ┌──────────┐
        │  START   │
        └────┬─────┘
             │
    ┌────────────────────┐
    │ EDGE ENHANCEMENT   │────  ST1
    └────────┬───────────┘
             │
    ┌────────────────────┐
    │   DIGITIZATION     │────  ST2
    └────────┬───────────┘
             │
    ┌────────────────────┐
    │ PROJECTION GENERATION │──  ST3
    └────────┬───────────┘
             │
    ┌────────────────────┐
    │ END-POINT DETECTOR │────  ST4
    └────────┬───────────┘
             │
    ┌────────────────────┐
    │  EVALUATED VALUE   │────  ST5
    │   ACQUISITION      │
    └────────┬───────────┘
             │
    ┌────────────────────┐
    │   ANGLE SEARCH     │────  ST6
    └────────┬───────────┘
             │
    ┌────────────────────┐
    │ ANGLE DETERMINATION│────  ST7
    └────────┬───────────┘
             │
    ┌────────────────────┐
    │   INFORMATION      │────  ST8
    │   RECOGNITION      │
    └────────┬───────────┘
             │
        ┌──────────┐
        │   END    │
        └──────────┘
```

FIG. 8

START

PLACE MEDIUM ON TABLE — ST11

CAPTURE PREDETERMINED REGION INCLUDING ENTIRE MEDIUM — ST12

STORE IN IMAGE MEMORY — ST13

DETECT ROTATION ANGLE ON IMAGE OF MEDIUM

PROJECTION GENERATING STEP

END POINT DETECTING STEP

EVALUATED VALUE ACQUIRING STEP

ANGLE DETERMINING STEP

— ST14

RECOGNIZE INFORMATION — ST15

END

FIG. 9

FIG. 10

(A)

(B)

(C)

FIG. 11

## INTERNATIONAL SEARCH REPORT

| International application No. |
|---|
| PCT/JP2017/034184 |

**A. CLASSIFICATION OF SUBJECT MATTER**
*G06T7/70(2017.01)i, G06K9/20(2006.01)i, G06K9/32(2006.01)i*

According to International Patent Classification (IPC) or to both national classification and IPC

**B. FIELDS SEARCHED**

Minimum documentation searched (classification system followed by classification symbols)
G06T7/70, G06K9/20, G06K9/32

Documentation searched other than minimum documentation to the extent that such documents are included in the fields searched
Jitsuyo Shinan Koho      1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)
JSTPlus(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2006-155126 A  (Mitsubishi Heavy Industries, Ltd.), 15 June 2006 (15.06.2006), paragraphs [0028] to [0034], [0039] to [0041]; fig. 3, 5 (Family: none) | 1-8 |
| A | JP 2006-163821 A  (Casio Computer Co., Ltd.), 22 June 2006 (22.06.2006), paragraphs [0046] to [0054]; fig. 5 to 6 (Family: none) | 1-8 |
| A | JP 8-172300 A  (Sanyo Electric Co., Ltd.), 02 July 1996 (02.07.1996), entire text; all drawings (Family: none) | 1-8 |

☐ Further documents are listed in the continuation of Box C.      ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 11 October 2017 (11.10.17) | Date of mailing of the international search report <br> 24 October 2017 (24.10.17) |
|---|---|
| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |

Form PCT/ISA/210 (second sheet) (January 2015)

**REFERENCES CITED IN THE DESCRIPTION**

**Patent documents cited in the description**

- JP H1197512 B

- JP 2010079643 A